# EUROPEAN PATENT APPLICATION

(11) **EP 4 582 296 A1**
(43) Date of publication of application: **09.07.2025**
(21) Application number: 23859831.2
(22) Date of filing: 03.07.2023
(51) Int. Cl.: B60L 53/12, H02J 50/12, H02J 50/40

(54) **GROUND POWER SUPPLY DEVICE AND WIRING**

(30) Priority: 01.09.2022 JP 2022139372
(71) Applicant: TOYOTA JIDOSHA KABUSHIKI KAISHA, Toyota-shi Aichi 471-8571 (JP); DENSO CORPORATION, Kariya-shi, Aichi 448-8661 (JP)
(72) Inventor: KIMURA, Kazutaka, Toyota-shi, Aichi 471-8571 (JP); HASHIMOTO, Toshiya, Toyota-shi, Aichi 471-8571 (JP); HASHIMOTO, Makoto, Toyota-shi, Aichi 471-8571 (JP); YAMAGUCHI, Nobuhisa, Kariya-shi, Aichi 448-8661 (JP); TANI, Keisuke, Kariya-shi, Aichi 448-8661 (JP); KANESAKI, Masaki, Kariya-shi, Aichi 448-8661 (JP); OBAYASHI, Kazuyoshi, Kariya-shi, Aichi 448-8661 (JP); TAKEMURA, Yuichi, Kariya-shi, Aichi 448-8661 (JP)
(74) Representative: D Young & Co LLP
(86) International application number: PCT/JP2023/024614
(87) International publication number: WO 2024/048061

(57) **Abstract**

A ground power supply device 1 that transmits power to a vehicle in a wireless manner includes: a plurality of resonance circuits 20; and one power supply source that supplies AC power having the same frequency to all the resonance circuits. Each of the resonance circuits includes a coil 23 embedded in a road and configured to transmit the power in a wireless manner, and a wiring 22 connecting each of the coils and the power supply source. The wiring of each of the resonance circuits has a length at least partially different from the wiring of another resonance circuit, and inductance parasitic on the wiring is formed to be at least partially different from the wiring of the other resonance circuit due to a difference in length. The resonance circuit further includes a capacitor having a different electrostatic capacitance in such a way that resonance frequencies of all the resonance circuits become equal when the inductance parasitic on the wiring is different.

## Description

### FIELD

The present disclosure relates to a ground power supply device and a wiring.

### BACKGROUND

There is known a ground power supply device which includes a plurality of coils for transmitting a power in a wireless manner and one power supply that supplies the power to the coil, and in which the coils and the power supply are connected to each other by a conductor (JP 2019-526219 A).

### SUMMARY

Since a distance between the power supply and the coil is different for each coil, the lengths of the conductors connecting the power supply and the coil are different from each other. Since inductance parasitic on the conductor varies, depending on the length of the conductor, a resonance frequency varies for each resonance circuit including the coil and the conductor having different length.

In view of the above problems, an object of the present disclosure is to suppress a difference in resonance frequency among a plurality of coils connected to one power supply.

The gist of the present disclosure is as follows:

(1) A ground power supply device that transmits power to a vehicle in a wireless manner, the ground power supply device comprising:
   a plurality of resonance circuits; and
   one power supply source that supplies AC power having the same frequency to all the resonance circuits, wherein
   each of the resonance circuits includes a coil embedded in a road and configured to transmit the power in a wireless manner, and a wiring connecting each of the coils and the power supply source,
   the wiring of each of the resonance circuits has a length at least partially different from the wiring of another resonance circuit, and inductance parasitic on the wiring is formed to be at least partially different from the wiring of the other resonance circuit due to a difference in length, and
   the resonance circuit further includes a capacitor having a different electrostatic capacitance in such a way that resonance frequencies of all the resonance circuits become equal when the inductance parasitic on the wiring is different.
(2) The ground power supply device according to above (1), wherein the capacitor has such electrostatic capacitance that the resonance frequencies of all the resonance circuits are the same as the frequency of the AC power when the inductance parasitic on the wiring is different.
(3) The ground power supply device according to above (1) or (2), wherein the wirings of the plurality of resonance circuits including a plurality of coils arranged adjacent to each other have the same length.
(4) The ground power supply device according to any one of above (1) to (3), wherein
   the wiring includes a first portion having the same length in all the resonance circuits and a second portion having a partially different length between the resonance circuits, and
   the second portion includes the capacitor.
(5) The ground power supply device according to above (4), wherein the capacitors provided in a plurality of the second portions having the same length have the same electrostatic capacitance.
(6) The ground power supply device according to above (4), wherein the first portion does not include the capacitor.
(7) The ground power supply device according to above (4) or (5), wherein the first portion is connected to the coil, the second portion is connected to the power supply source, and a plurality of the second portions having the same length are connected to the first portion by the same connector.
(8) The ground power supply device according to any one of above (1) to (7), wherein
   the wiring is configured at least partially by connecting a plurality of wiring modules in series, the wiring modules each including a cable having the same length and a capacitor connected to the cable,
   the capacitor of each of the wiring modules has such electrostatic capacitance that cancels an influence on a resonance frequency generated in the coil at a frequency of the AC power due to inductance parasitic on the cable of the wiring module, and
   in the resonance circuit including wiring having a different length, the length of the wiring is different due to a difference in the number of the wiring modules constituting the wiring of the resonance circuit.
(9) The ground power supply device according to above (8), wherein the length of the cable of the wiring module is equal to an integral multiple of an interval between the coils adjacent to each other.

### BRIEF DESCRIPTION OF DRAWINGS

Fig. 1 is a diagram schematically illustrating a ground power supply device and a vehicle according to a first embodiment.
Fig. 2 is a diagram schematically illustrating a configuration of the ground power supply device and the vehicle according to the first embodiment.
Fig. 3 is a diagram schematically illustrating the configuration of the ground power supply device according to the first embodiment.
Fig. 4 is a diagram similar to Fig. 3, schematically illustrating a configuration of the ground power supply device according to a modification of the first embodiment.
Fig. 5 is a diagram similar to Figs. 3 and 4, schematically illustrating a configuration of a ground power supply device according to a second embodiment.
Fig. 6 is a diagram similar to Figs. 3 to 5, schematically illustrating a configuration of a ground power supply device according to a third embodiment.
Fig. 7 is a diagram schematically illustrating a configuration of each wiring module.
Fig. 8 is a diagram schematically illustrating a configuration of a ground power supply device according to a fourth embodiment.

### DESCRIPTION OF EMBODIMENTS

Hereinafter, embodiments will be described in detail with reference to the drawings. In the following description, similar components are denoted by the same reference numerals.

### First Embodiment

### <Outline of ground power supply device>

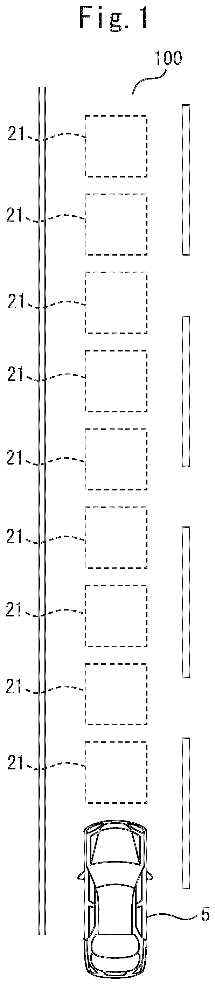

With reference to Fig. 1, an outline of a ground power supply device 1 according to a first embodiment and a vehicle 5 capable of receiving power from the ground power supply device 1 will be described. Fig. 1 is a diagram schematically illustrating the ground power supply device 1 according to the first embodiment and the vehicle 5. The ground power supply device 1 transmits the power to the vehicle 5 by wireless power transmission by magnetic field resonance coupling (magnetic field resonance). In particular, in the present embodiment, when the vehicle 5 is traveling, wireless power transmission is performed from the ground power supply device 1 to the vehicle 5.

The term "traveling" means a state where the vehicle 5 is located on the road for traveling. Therefore, the term "traveling" includes not only a state where the vehicle 5 is actually running at any speed greater than zero, but also a state where the vehicle 5 is stopped on the road, for example, by waiting for a traffic light.

The ground power supply device 1 includes a plurality of power transmission units 21 embedded in a road (underground) on which the vehicle 5 travels. As illustrated in Fig. 1, in the present embodiment, the power transmission unit 21 is disposed at predetermined intervals along each of lanes 100 at the center of each of the lanes 100 on which the vehicle 5 travels.

### <Configuration of ground power supply device>

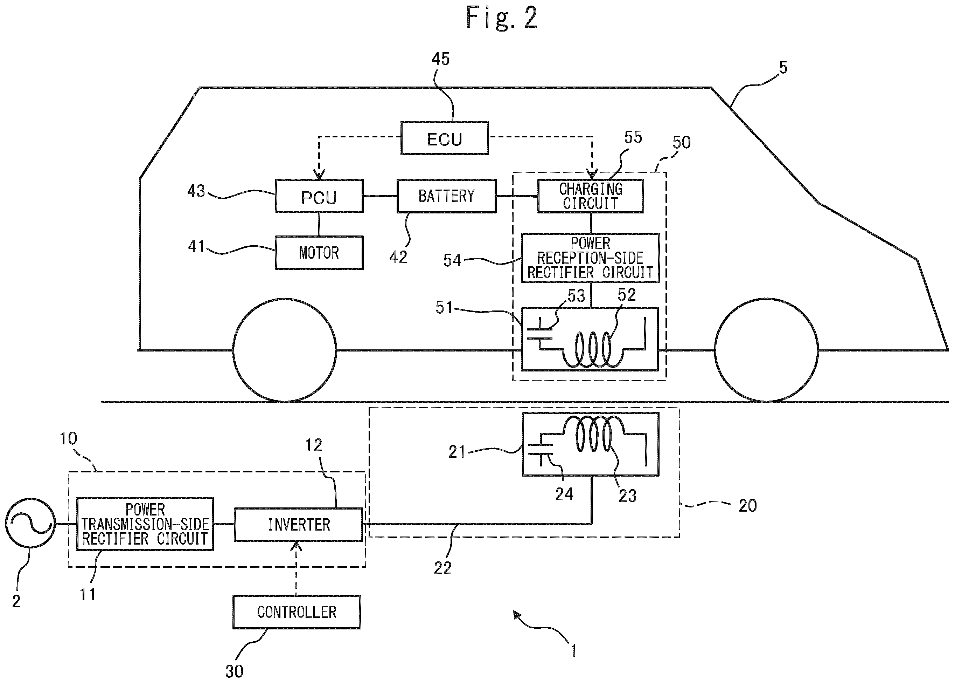

Next, a configuration of the ground power supply device 1 will be schematically described with reference to Fig. 2. Fig. 2 is a diagram schematically illustrating a configuration of the ground power supply device 1 and the vehicle 5. As illustrated in Fig. 2, the ground power supply device 1 includes a power source 2, a power supply unit 10, a plurality of power transmission-side resonance circuits 20 including the power transmission unit 21, and a controller 30. The power transmission-side resonance circuit 20 including the power transmission unit 21 is embedded in the road (underground). On the other hand, the power supply unit 10 and the controller 30 may be embedded in the road, or may be arranged in a place (including the ground) different from the road. In the present embodiment, one power supply unit 10 is connected to a plurality of power transmission-side resonance circuits 20.

The power source 2 supplies the power to the power transmission unit 21 via the power supply unit 10. The power source 2 is, for example, a commercial AC power source that supplies single-layer AC power. The power source 2 may be another AC power supply that supplies three-phase AC power, or may be a DC power supply such as a fuel cell.

The power supply unit 10 converts AC power supplied from the power source 2 into a high-frequency AC power to be supplied to the power transmission-side resonance circuit 20. The power supply unit 10 includes a power transmission-side rectifier circuit 11 and an inverter 12. In the power supply unit 10, the AC power supplied from the power source 2 is rectified in the power transmission-side rectifier circuit 11 and converted into a DC current, and this DC current is converted into the AC power in the inverter 12. The power source 2 and the power supply unit 10 function as a power supply source that supplies the AC power to the power transmission-side resonance circuit 20.

The power transmission-side rectifier circuit 11 is electrically connected to the power source 2 and the inverter 12. The power transmission-side rectifier circuit 11 rectifies an AC power supplied from the power source 2 to convert the AC power into a DC power, and supplies the DC power to the inverter 12. The power transmission-side rectifier circuit 11 is, for example, an AC/DC converter. In the present embodiment, one power supply unit 10 is provided with one power transmission-side rectifier circuit 11. When the power source 2 is the DC power supply, the power transmission-side rectifier circuit 11 may be omitted.

The inverter 12 is electrically connected to the power transmission-side rectifier circuit 11 and the power transmission-side resonance circuit 20. The inverter 12 converts the DC power supplied from the power transmission-side rectifier circuit 11 into AC power (high-frequency AC power) having a higher frequency than that of the AC power of the power source 2, and supplies the high-frequency AC power to the power transmission-side resonance circuit 20. In the present embodiment, the power supply unit 10 includes the inverters 12 corresponding in number to the power transmission-side resonance circuit 20. Each of the inverters 12 is connected to one of the corresponding power transmission-side resonance circuits 20 different from each other. In addition, each of the inverters 12 supplies AC power having the same frequency as each other to the power transmission-side resonance circuit 20. Therefore, the power supply unit 10 supplies the AC power having the same frequency to all the power transmission-side resonance circuits 20.

The power transmission-side resonance circuit 20 includes a power transmission unit 21 and a wiring 22. The power transmission-side resonance circuit 20 is connected to the power supply unit 10, and generates an alternating magnetic field when a high-frequency AC power is supplied from the power supply unit 10.

The power transmission unit 21 includes a power transmission-side coil 23 and a power transmission-side capacitor 24. The power transmission-side coil 23 generates a magnetic field to transmit the power in a wireless manner, when a current flows the power transmission-side coil 23. The power transmission-side coil 23 and the power transmission-side capacitor 24 constitute a resonator. Various parameters (the outer diameter and inner diameter of the power transmission-side coil 23, the number of turns of the power transmission-side coil 23, electrostatic capacitance of the power transmission-side capacitor 24, and the like) of the power transmission-side coil 23 and the power transmission-side capacitor 24 are determined such that a resonance frequency of the power transmission unit 21 becomes a predetermined set value. The predetermined set value is, for example, from 10 kHz to 100 GHz, and is preferably 85 kHz defined by the SAE TIR J2954 standard as a frequency band for wireless power transmission. In the present embodiment, all the power transmission units 21 are configured such that various parameters of the power transmission-side coil 23 and the power transmission-side capacitor 24 are the same. In other words, all the power transmission units 21 have the same configuration.

As described above, the power transmission unit 21 is embedded in the road, so that the power transmission-side coil 23 and the power transmission-side capacitor 24 are also embedded in the road. The power transmission unit 21 is disposed at the center of the lane through which the vehicle 5 passes such that the center of the power transmission-side coil 23 is located at the center of the lane. When a high-frequency power is supplied from the inverter 12 to the power transmission unit 21 via the wiring 22, the power transmission-side coil 23 of the power transmission unit 21 generates an alternating magnetic field for power transmission.

The wiring 22 is used to connect the inverter 12 of the power supply unit 10 and the power transmission unit 21 (i.e., the power transmission-side coil 23). In the present embodiment, the ground power supply device 1 includes the plurality of power transmission units 21 and the plurality of inverters 12 corresponding to the power transmission units 21 different from each other. Each of the wirings 22 connects one inverter 12 and one corresponding power transmission unit 21.

The controller 30 is, for example, a general-purpose computer, and performs various controls of the ground power supply device 1. For example, the controller 30 is electrically connected to the inverter 12 of the power supply unit 10, and controls the inverter 12 to control power transmission by the power transmission unit 21. Specifically, for example, the controller 30 specifies the power transmission unit 21 on which the vehicle 5 including the power reception device 50 is traveling based on an output from an arbitrary sensor (not illustrated), and controls the inverter 12 to supply the power to the specified power transmission unit 21. The controller 30 includes a processor that executes various processes, and a memory that stores a program for the processor to execute various processes, various data used when the processor executes various processes, and the like.

### <Configuration of vehicle>

Next, a configuration of the vehicle 5 will be schematically described with reference to Fig. 2. As illustrated in Fig. 2, the vehicle 5 includes a motor 41, a battery 42, a power control unit (PCU) 43, a power reception device 50, and an electronic control unit (ECU) 45. The vehicle 5 is an electric vehicle (BEV) in which the motor 41 drives the vehicle 5, or a hybrid vehicle (HEV) in which an internal combustion engine drives the vehicle 5 in addition to the motor 41.

The motor 41 is, for example, an AC synchronous motor, and functions as an electric motor and a generator. When functioning as an electric motor, the motor 41 is driven using the electric power stored in the battery 42 as a power source. The output of the motor 41 is transmitted to wheels via a reduction gear and an axle. On the other hand, during deceleration of the vehicle 5, the motor 41 is driven by rotation of the wheels, and the motor 41 functions as a generator to generate a regenerative power.

The battery 42 is a rechargeable secondary battery, and includes, for example, a lithium ion battery, a nickel hydrogen battery, and the like. The battery 42 stores the power (for example, driving electric power of the motor 41) necessary for traveling of the vehicle 5. When the power received by the power reception device 50 is supplied from the power transmission unit 21, the battery 42 is charged. When the regenerative power generated by the motor 41 is supplied to the battery 42, the battery 42 is charged. When the battery 42 is charged, a state of charge (SOC) of the battery 42 is recovered. The battery 42 may also be chargeable by an external power source other than the ground power supply device 1 via a charging port provided in the vehicle 5.

The PCU 43 is electrically connected to the battery 42 and the motor 41. The PCU 43 includes an inverter, a boost converter, and a DC/DC converter. The inverter converts the DC power supplied from the battery 42 into the AC power, and supplies the AC power to the motor 41. On the other hand, the inverter converts the AC power (regenerative power) generated by the motor 41 into DC power, and supplies the DC power to the battery 42. The boost converter boosts the voltage of the battery 42 as necessary when the power stored in the battery 42 is supplied to the motor 41. The DC/DC converter steps down the voltage of the battery 42 when the power stored in the battery 42 is supplied to an electronic device such as a headlight.

The power reception device 50 receives the power from the power transmission unit 21 and supplies the received power to the battery 42. The power reception device 50 includes a power reception-side resonance circuit 51, a power reception-side rectifier circuit 54, and a charging circuit 55.

The power reception-side resonance circuit 51 is disposed at a bottom of the vehicle 5 so that a distance from the road surface is small. The power reception-side resonance circuit 51 has a configuration similar to that of the power transmission unit 21, and includes a power reception-side coil 52 and a power reception-side capacitor 53. The power reception-side coil 52 is configured such that a current flows through the power reception-side coil 52 when a magnetic field is generated around the power reception-side coil 52. The power reception-side coil 52 and the power reception-side capacitor 53 constitute a resonator. Various parameters (the outer diameter and inner diameter of the power reception-side coil 52, the number of turns of the power reception-side coil 52, the electrostatic capacitance of the power reception-side capacitor 53, and the like) of the power reception-side coil 52 and the power reception-side capacitor 53 are determined such that the resonance frequency of the power reception-side resonance circuit 51 matches the resonance frequency of the power transmission unit 21. It should be noted that as long as a deviation amount between the resonance frequency of the power reception-side resonance circuit 51 and the resonance frequency of the power transmission unit 21 is small, for example, as long as the resonance frequency of the power reception-side resonance circuit 51 is within a range of ±20% of the resonance frequency of the power transmission unit 21, the resonance frequency of the power reception-side resonance circuit 51 does not necessarily coincide with the resonance frequency of the power transmission unit 21.

As illustrated in Fig. 2, when the alternating magnetic field is generated by the power transmission unit 21 while the power reception-side resonance circuit 51 faces the power transmission unit 21, vibration of the alternating magnetic field is transmitted to the power reception-side resonance circuit 51 that resonates at the same resonance frequency as that of the power transmission unit 21. As a result, an induced current flows in the power reception-side resonance circuit 51 by electromagnetic induction, and an induced electromotive force is generated in the power reception-side resonance circuit 51 by the induced current. In other words, the power transmission unit 21 transmits the power to the power reception-side resonance circuit 51, and the power reception-side resonance circuit 51 receives the power from the power transmission unit 21.

The power reception-side rectifier circuit 54 is electrically connected to the power reception-side resonance circuit 51 and the charging circuit 55. The power reception-side rectifier circuit 54 rectifies the AC power supplied from the power reception-side resonance circuit 51 to convert the AC power into the DC power, and supplies the DC power to the charging circuit 55. The power reception-side rectifier circuit 54 is, for example, an AC/DC converter.

The charging circuit 55 is electrically connected to the power reception-side rectifier circuit 54 and the battery 42. The charging circuit 55 converts the DC power supplied from the power reception-side rectifier circuit 54 into a voltage level of the battery 42, and supplies the DC power to the battery 42. When the power transmitted from the power transmission unit 21 is supplied to the battery 42 by the power reception device 50, the battery 42 is charged. The charging circuit 55 is, for example, a DC/DC converter.

The ECU 45 performs various controls of the vehicle 5. For example, the ECU 45 is electrically connected to the charging circuit 55 of the power reception device 50, and controls the charging circuit 55 to control charging of the battery 42 by the power transmitted from the power transmission unit 21. Further, the ECU 45 is electrically connected to the PCU 43, and controls the PCU 43 to control exchange of the power between the battery 42 and the motor 41.

### <Power transmission-side resonance circuit>

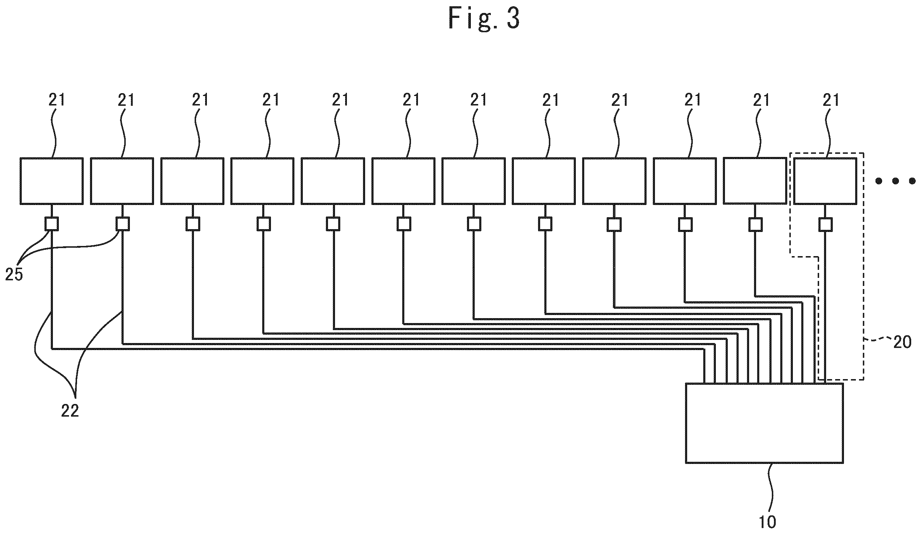

Next, a configuration of the power transmission-side resonance circuit 20 will be described with reference to Fig. 3. Fig. 3 is a diagram schematically illustrating a configuration of the ground power supply device 1. In particular, Fig. 3 illustrates a state where the plurality of power transmission-side resonance circuits 20 are connected to one power supply unit 10. In Fig. 3, only one of the plurality of power transmission-side resonance circuits 20 is denoted by reference numeral 20.

As illustrated in Fig. 3, the plurality of power transmission units 21 connected to one power supply unit 10 are arranged in a line along the lane in the road. Each of the power transmission units 21 and the power supply unit 10 are connected by the wiring 22 of the power transmission-side resonance circuits 20 different from each other. The wiring 22 connecting each of the power transmission units 21 and the power supply unit 10 has two conducting wires through which currents flow in opposite directions.

As illustrated in Fig. 3, an interval between each of the plurality of power transmission units 21 arranged in a line and one power supply unit 10 is different from each other. In the present embodiment, each of the power transmission units 21 and the power supply unit 10 are connected by one wiring 22 disposed without generating slack therebetween. Therefore, the plurality of wirings 22, each of which connects each of the power transmission units 21 and the power supply unit 10 have different lengths. In other words, in the present embodiment, the wiring 22 of each of the power transmission-side resonance circuits 20 has a length different from the length of the wiring 22 of the other power transmission-side resonance circuit 20.

Here, since the wirings 22 of the power transmission-side resonance circuits 20 have different lengths, different parasitic inductances are parasitic for each of the wirings 22. In particular, the longer the length of the wiring 22, the larger the parasitic inductance parasitic on the wiring 22. When different parasitic inductances are parasitic for each of the wirings 22 in this manner, the resonance frequency is different for each of the power transmission-side resonance circuits 20 including each of the wirings 22. When the resonance frequency is different for each of the power transmission-side resonance circuits 20 in this manner, the resonance frequency of some of the power transmission-side resonance circuits 20 becomes a frequency different from the frequency of the AC power supplied by the power supply unit 10. Furthermore, when the resonance frequency is different for each of the power transmission-side resonance circuits 20 in this manner, the resonance frequency of some of the power transmission-side resonance circuits 20 becomes a frequency different from the resonance frequency of the power reception-side resonance circuit 51 of the vehicle 5. When the resonance frequency of the power transmission-side resonance circuit 20 becomes a frequency different from the frequency of the AC power and the resonance frequency of the power reception-side resonance circuit 51, transmission efficiency in the wireless power transmission decreases.

Thus, the power transmission-side resonance circuit 20 according to the present embodiment is provided with a resonance compensation capacitor 25. In the present embodiment, the resonance compensation capacitor 25 is connected in series with the wiring 22 in the middle of the wiring 22. In other words, in the present embodiment, each of the wiring 22 includes the resonance compensation capacitor 25. In the present embodiment, the resonance compensation capacitor 25 is connected to one of the two conducting wires of each of the wirings 22.

The resonance compensation capacitor 25 has different electrostatic capacitance according to the length of the wiring 22 of the power transmission-side resonance circuit 20 in which the resonance compensation capacitor 25 is provided. Specifically, the electrostatic capacitance of the resonance compensation capacitor 25 decreases as the length of the wiring 22 increases. More specifically, the resonance compensation capacitor 25 has such electrostatic capacitance that the resonance frequency of the power transmission-side resonance circuit 20 is equal to the frequency of the AC power supplied by the power supply unit 10 even when the parasitic inductances parasitic on the wiring 22 of the power transmission-side resonance circuit 20 are different from each other.

According to the present embodiment, even when the length of the wiring 22 is different for each of the power transmission-side resonance circuit 20 and thus the parasitic inductance parasitic on the wiring 22 is different, the resonance frequency of the power transmission-side resonance circuit 20 can be made equal to the frequency of the AC power supplied by the power supply unit 10. Therefore, according to the present embodiment, even in such a case, the resonance frequencies of all the power transmission-side resonance circuits 20 can be made substantially the same, and the resonance frequencies of all the power transmission-side resonance circuits 20 can be made equal to the resonance frequency of the power reception-side resonance circuit 51 of the vehicle 5. Thus, according to the present embodiment, transmission efficiency between the power transmission unit 21 and the power reception-side resonance circuit 51 can be increased.

### <Modification>

In the above embodiment, the resonance compensation capacitor 25 is connected in series with the wiring 22 in the middle of the wiring 22. However, the resonance compensation capacitor 25 may be provided between the wiring 22 and the power transmission unit 21 or between the wiring 22 and the inverter 12 of the power supply unit 10. Alternatively, the resonance compensation capacitor 25 may be provided in the power transmission unit 21 (for example, between the power transmission-side coil 23 and the power transmission-side capacitor 24 of the power transmission unit 21) as long as the resonance compensation capacitor 25 is connected in series in the power transmission-side resonance circuit 20.

In the above embodiment, one resonance compensation capacitor 25 is provided in one power transmission-side resonance circuit 20. However, a plurality of the resonance compensation capacitors 25 may be provided in one power transmission-side resonance circuit 20. For example, in the above embodiment, the resonance compensation capacitor 25 is connected to one of the two conducting wires of each of the wirings 22. However, the resonance compensation capacitor 25 may be connected to each of the two conducting wires of each of the wirings 22. Even in this case, the electrostatic capacitance of the resonance compensation capacitor 25 is set to such a value that the resonance frequency of the power transmission-side resonance circuit 20 is equal to the frequency of the AC power supplied by the power supply unit 10.

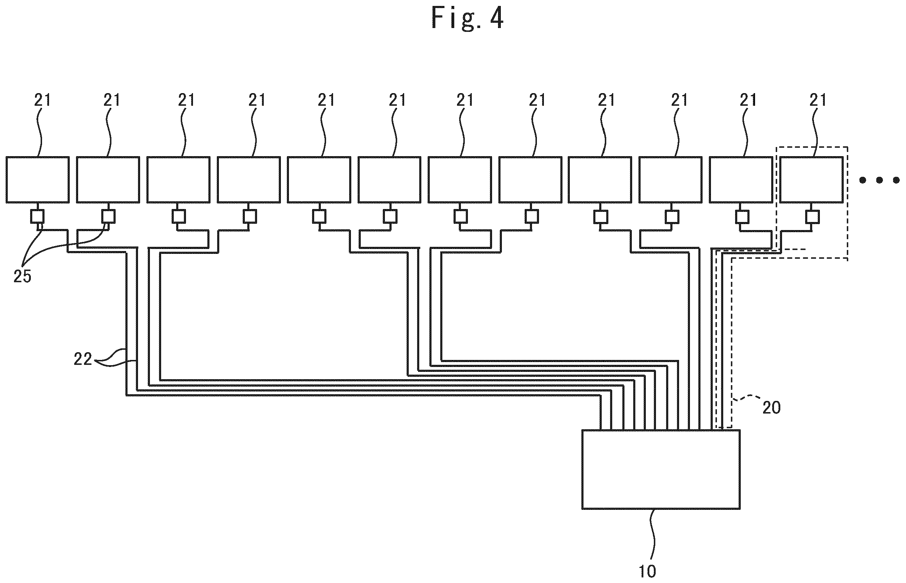

In addition, in the above embodiment, all the wirings 22 connected to the power supply unit 10 have different lengths. However, some of the wirings 22 may have the same length. Fig. 4 is a diagram similar to Fig. 3, schematically illustrating a configuration of the ground power supply device 1 according to a modification of the first embodiment. In the example illustrated in Fig. 4, the wirings of the plurality of power transmission-side resonance circuits 20 (specifically, the power transmission-side resonance circuit 20 including the four power transmission units 21 on the right side, the power transmission-side resonance circuit 20 including the four power transmission units 21 at the center, and the power transmission-side resonance circuit 20 including the four power transmission units 21 on the left side) including the plurality of power transmission units 21 (the power transmission-side coils 23) arranged adjacent to each other have the same length. As described above, the resonance compensation capacitor 25 in the power transmission-side resonance circuit 20 having the wiring 22 having the same length has the same electrostatic capacitance. As a result, the number of variations in the length of the wiring and the number of variations in the resonance compensation capacitor 25 can be reduced, and therefore the manufacturing cost can be reduced and the ground power supply device 1 can be easily laid.

As described above, in the present embodiment and the modification thereof, the wiring 22 of the power transmission-side resonance circuit 20 has a length at least partially different from the wiring 22 of the other power transmission-side resonance circuit 20, and the inductance parasitic on the wiring 22 is formed to be at least partially different from the wiring 22 of the other power transmission-side resonance circuit 20 due to the different length.

### Second Embodiment

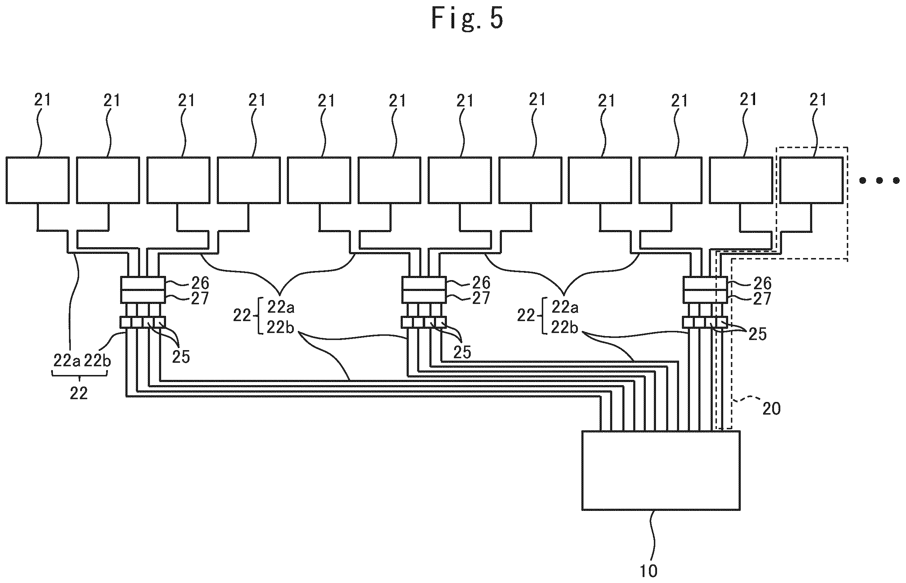

Next, a ground power supply device 1 according to a second embodiment will be described with reference to Fig. 5. The configuration of the ground power supply device 1 according to the second embodiment is basically similar to the configuration of the ground power supply device 1 according to the first embodiment. Hereinafter, portions different from the configuration of the ground power supply device 1 according to the first embodiment will be mainly described.

Fig. 5 is a diagram similar to Figs. 3 and 4, schematically illustrating a configuration of the ground power supply device 1 according to the second embodiment. Also in the present embodiment, one power transmission unit 21 and one wiring 22 constitute one power transmission-side resonance circuit 20. Also in Fig. 5, the plurality of power transmission-side resonance circuits 20 are connected to one power supply unit 10.

As illustrated in Fig. 5, each of the wirings 22 has two portions including a first wiring portion 22a and a second wiring portion 22b. The first wiring portion 22a of each of the wirings 22 is connected to the corresponding power transmission unit 21 and a first connector 26. The plurality of first wiring portions 22a connected to the plurality of power transmission units 21 arranged adjacent to each other are connected to one first connector 26 (in the example illustrated in Fig. 5, the four first wiring portions 22a). Therefore, one first connector 26 is connected to the plurality of power transmission units 21 arranged adjacent to each other. In the present embodiment, all the first wiring portions 22a have the same length. Therefore, regarding the first wiring portion 22a, there is no difference in magnitude of parasitic inductance between the power transmission-side resonance circuits 20.

The second wiring portion 22b of each of the wirings 22 is connected to a corresponding second connector 27 and the power supply unit 10. A plurality of the second wiring portions 22b of one group having the same length are connected to one second connector 27 (in the example illustrated in Fig. 5, the four second wiring portions 22b). In particular, the second wiring portions 22b of the same number as the number of the first wiring portions 22a connected to the first connector 26 are connected to the second connector 27. The second connector 27 is connected to the first connector 26, whereby the second wiring portion 22b is connected to the corresponding first wiring portion 22a. In the present embodiment, the plurality of second wiring portions 22b having the same length are connected to the first wiring portion 22a via the same first connector 26 and the same second connector 27. Since the first connector 26 is connected to the plurality of first wiring portions 22a connected to the plurality of power transmission units 21 arranged adjacent to each other, in the example illustrated in Fig. 5, the wirings of the plurality of power transmission-side resonance circuits 20 including the plurality of power transmission units 21 (the power transmission-side coils 23) arranged adjacent to each other (specifically, the power transmission-side resonance circuit 20 including the four power transmission units 21 on the right side, the power transmission-side resonance circuit 20 including the four power transmission units 21 at the center, and the power transmission-side resonance circuit 20 including the four power transmission units 21 on the left side) have the same length.

In the present embodiment, a resonance compensation capacitor 25 is provided in the second wiring portion 22b. In particular, the resonance compensation capacitor 25 is connected in series with the second wiring portion 22b in the middle of the second wiring portion 22b. Also in the present embodiment, the resonance compensation capacitor 25 is connected to one of the two conducting wires of each of the second wiring portions 22b. In addition, also in the present embodiment, the resonance compensation capacitor 25 provided in each of the second wiring portions 22b has the electrostatic capacitance corresponding to the length of the second wiring portion 22b. Therefore, in the present embodiment, the resonance compensation capacitors 25 provided in the plurality of second wiring portions 22b of the respective groups connected to the same second connector 27 and having the same length have the same electrostatic capacitance. Here, all the wirings 22 of the power transmission-side resonance circuits 20 including the second wiring portions 22b having the same length have the same length, and thus have the same parasitic inductance. Thus, since the resonance compensation capacitor 25 provided in the second wiring portion 22b has the same electrostatic capacitance as described above, the resonance frequencies of the power transmission-side resonance circuits 20 can be made equal.

According to the present embodiment, the first wiring portion 22a has the same length. Thus, one first connector 26 and the plurality of first wiring portions 22a connected thereto have the same configuration. Therefore, parts can be shared in manufacturing the first connector 26 and the first wiring portion 22a. The second wiring portion 22b connected to one second connector 27 has the same configuration. Therefore, the number of variations in the length of the second wiring portion 22b and the number of variations in the resonance compensation capacitor 25 can be reduced with respect to the number of the power transmission units 21, and thus, while the manufacturing cost can be reduced, the ground power supply device 1 can be easily laid. Although the power transmission units 21 are arranged at different positions from each other, the first wiring portions 22a connected to the plurality of power transmission units 21 are connected to the second wiring portion 22b at the same point by the first connector 26 and the second connector 27, so that the wiring can be easily wired.

On the other hand, in the present embodiment, the resonance compensation capacitor 25 is not provided in the first wiring portion 22a. Therefore, in the present embodiment, the electrostatic capacitance of the resonance compensation capacitor 25 provided in the second wiring portion 22b is set in consideration of the length of the wiring 22 including the first wiring portion 22a and the second wiring portion 22b. Furthermore, in the present embodiment, since the length of the first wiring portion 22a is the same in all the power transmission-side resonance circuits 20, the electrostatic capacitance of the resonance compensation capacitor 25 provided in the second wiring portion 22b and the electrostatic capacitance of the power transmission-side capacitor 24 of the power transmission unit 21 can be set in consideration of the parasitic inductance generated in the first wiring portion 22a. Since the first wiring portion 22a does not include the resonance compensation capacitor 25 as described above, the first wiring portion 22a can have a simple configuration.

In the above embodiment, the four wiring portions 22a and 22b are connected to one connector 26 and one connector 27. However, as long as the plurality of wiring portions 22a and 22b are connected to one connector 26 and one connector 27, the wiring portions 22a and 22b other than the four wiring portions may be connected. Therefore, one group of the second wiring portions 22b having the same length may include the plurality of second wiring portions 22b other than the four wiring portions.

The resonance compensation capacitor may also be provided in the first wiring portion 22a. In this case, since the lengths of all the first wiring portions 22a are equal, the electrostatic capacitances of the resonance compensation capacitors provided in all the first wiring portions 22a are also equal. The first wiring portion 22a has the electrostatic capacitance corresponding to the length of the first wiring portion 22a so as to cancel an influence of the parasitic inductance parasitic on the first wiring portion 22a on the resonance frequency of the power transmission unit 21.

### Third Embodiment

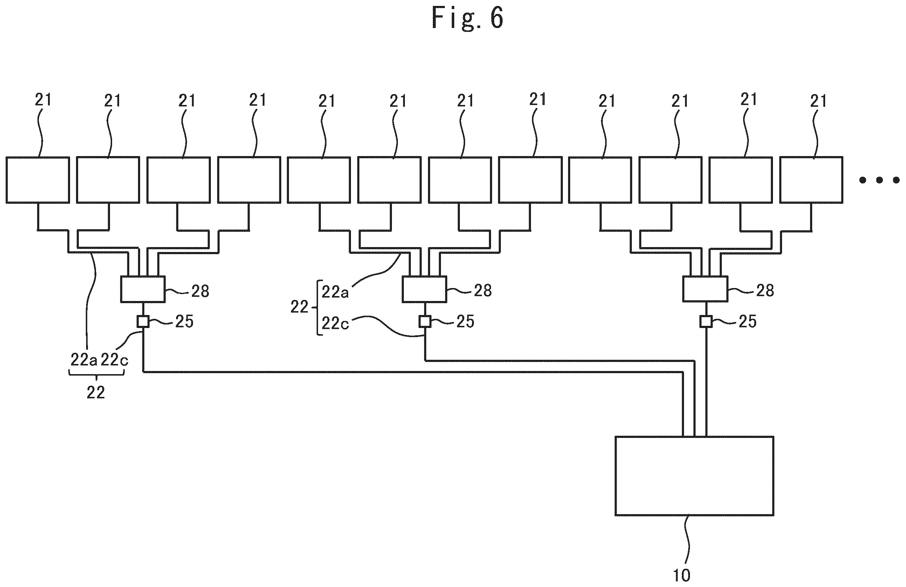

Next, a ground power supply device 1 according to a third embodiment will be described with reference to Fig. 6. The configuration of the ground power supply device 1 according to the third embodiment is basically similar to the configuration of the ground power supply device 1 according to the second embodiment. Therefore, hereinafter, portions different from the configuration of the ground power supply device according to the second embodiment will be mainly described.

Fig. 6 is a diagram similar to Figs. 3 to 5, schematically illustrating a configuration of the ground power supply device 1 according to the third embodiment. As illustrated in Fig. 6, also in the present embodiment, each of the wirings 22 has the first wiring portion 22a and a second wiring portion 22c. The first wiring portion 22a of each of the wirings 22 is connected to the corresponding power transmission unit 21 and a changeover switch 28. The plurality of first wiring portions 22a connected to the plurality of power transmission units 21 arranged adjacent to each other are connected to one changeover switch 28. Also in the present embodiment, all the first wiring portions 22a have the same length.

On the other hand, in the present embodiment, one second wiring portion 22c is connected to one changeover switch 28. Therefore, one second wiring portion 22c is connected to the plurality of first wiring portions 22a via the changeover switch 28. The plurality of second wiring portions 22c are connected to the changeover switches 28 different from each other and one common power supply unit 10. In the present embodiment, one second wiring portion 22c is shared by the plurality of power transmission-side resonance circuits 20. In any case, also in the present embodiment, one power transmission unit 21 and one wiring 22 constitute one power transmission-side resonance circuit 20.

Also in the present embodiment, a resonance compensation capacitor 25 is provided in the second wiring portion 22c. Also in the present embodiment, the resonance compensation capacitor 25 provided in each of the second wiring portions 22c has the electrostatic capacitance corresponding to the length of the second wiring portion 22c.

Each of the changeover switches 28 is connected to the plurality of power transmission units 21 via the plurality of first wiring portions 22a, and is connected to the power supply unit 10 via one second wiring portion 22c. The changeover switch 28 selectively connects one first wiring portion 22a of the plurality of first wiring portions 22a connected to the changeover switch 28 to the second wiring portion 22c. Therefore, the changeover switch 28 selectively connects one of the plurality of power transmission units 21 to the power supply unit 10. In other words, the changeover switch 28 switches the power transmission unit 21 connected to the power supply unit 10.

The changeover switch 28 is connected to the controller 30 and controlled by the controller 30. For example, the controller 30 specifies the power transmission unit 21 on which the vehicle 5 including the power reception device 50 is traveling based on the output from an arbitrary sensor (not illustrated), and switches the changeover switch 28 so that the specified power transmission unit 21 and the power supply unit 10 are connected.

According to the present embodiment, one second wiring portion 22c is connected to the plurality of power transmission units 21. In other words, in the plurality of power transmission-side resonance circuits 20, one second wiring portion 22c is shared. As a result, the second wiring portion 22c can be easily laid. In addition, the number of inverters 12 required in the power supply unit 10 can be reduced, so that the manufacturing cost of the power supply unit 10 can be reduced.

### Fourth Embodiment

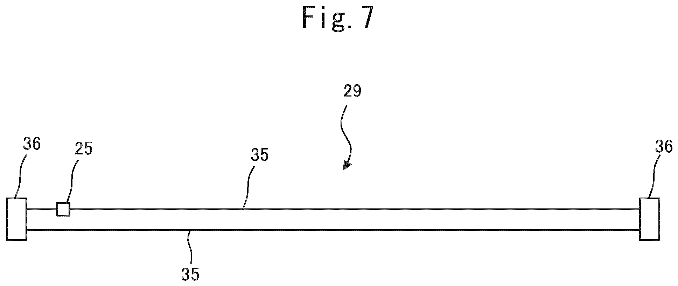

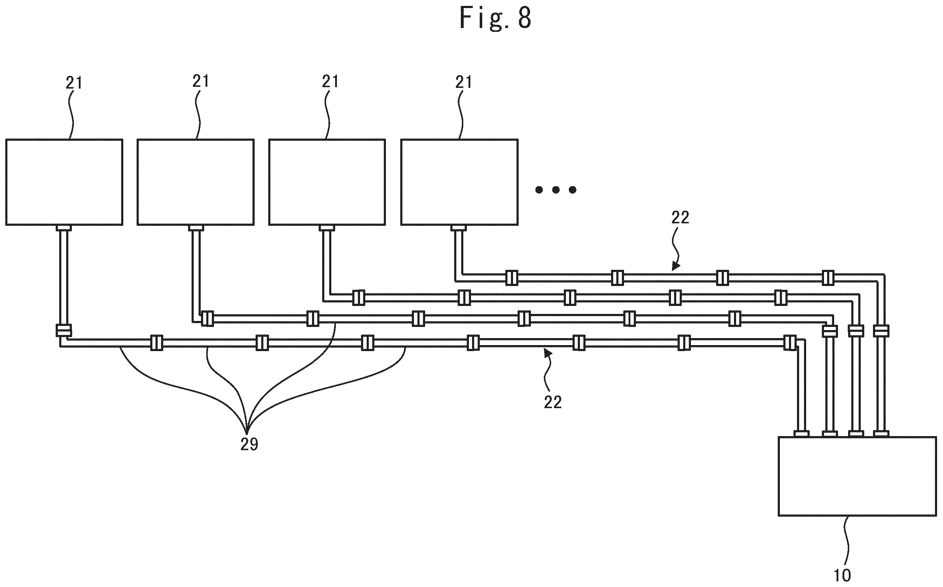

Next, a ground power supply device 1 according to a fourth embodiment will be described with reference to Figs. 7 and 8. The configuration of the ground power supply device 1 according to the fourth embodiment is basically similar to the configuration of the ground power supply device 1 according to the first embodiment. Therefore, hereinafter, portions different from the configuration of the ground power supply device 1 according to the first embodiment will be mainly described.

In the ground power supply device 1 according to the first embodiment, each power transmission unit 21 and a power supply unit 10 are connected by one of the wirings 22 having different lengths. On the other hand, in the ground power supply device 1 according to the present embodiment, each of the power transmission units 21 and the power supply unit 10 are connected by a plurality of wiring modules 29 connected in series.

Fig. 7 is a diagram schematically illustrating a configuration of each of the wiring modules 29. As illustrated in Fig. 7, each of the wiring modules 29 includes a cable 35, a resonance compensation capacitor 25 connected in series to the cable 35, and a connector 36.

As illustrated in Fig. 7, each of the wiring modules 29 has the two cables 35 through which currents flow in opposite directions to each other. In the present embodiment, each of the wiring modules 29 includes one resonance compensation capacitor 25, and the resonance compensation capacitor 25 is connected to one of the two cables 35. Both ends of the two cables 35 are connected to the connectors 36. The connector 36 of each of the wiring modules 29 can be connected to the connector 36 of another wiring module 29. Each of the wiring modules 29 may include the plurality of resonance compensation capacitors 25. In this case, one or more resonance compensation capacitors 25 are connected to each of the cables 35.

In the present embodiment, all the wiring modules 29 are configured such that the cables 35 have the same length and the resonance compensation capacitors 25 have the same electrostatic capacitance. In particular, in the present embodiment, the length of the cables 35 of all the wiring modules 29 is equal to the interval (in particular, the interval between the power transmission-side coils 23 arranged adjacent to each other) of the power transmission units 21 arranged adjacent to each other. The resonance compensation capacitor 25 has such electrostatic capacitance that cancels the influence on the parasitic inductance parasitic on the cable 35 constituting each of the wiring modules 29 on the resonance frequency (i.e., the resonance frequency generated in the power transmission-side coil 23) of the power transmission unit 21.

Fig. 8 is a diagram schematically illustrating a configuration of the ground power supply device 1 according to the fourth embodiment. As illustrated in Fig. 8, each of the wirings 22 connects one power transmission unit 21 and the power supply unit 10. The wirings 22 have different lengths. In the present embodiment, each of the wirings 22 is configured by connecting the plurality of wiring modules 29 in series. As described above, since the cables 35 of all the wiring modules 29 have the same length, the length of the wiring 22 is different as the number of the wiring modules 29 constituting the wiring 22 is different. Therefore, the wiring 22 used for the power transmission unit 21 whose distance from the power supply unit 10 is longer is configured by a larger number of wiring modules 29.

According to the present embodiment, all the wirings 22 are configured by the plurality of wiring modules 29 having the same configuration. Therefore, it is not necessary to use a wiring having an individual configuration including a resonance compensation capacitor having a different electrostatic capacitance for each of the wirings 22 having different lengths. Thus, the wiring 22 can be easily manufactured, and the wiring 22 can be easily wired when the power transmission-side resonance circuit 20 is laid.

In the above embodiment, all the wirings 22 connected to the power supply unit 10 have different lengths. However, as in the example illustrated in Fig. 4, some of the wirings 22 may have the same length. In this case, the wirings 22 having the same length are configured by connecting the same number of wiring modules 29 in series.

In the above embodiment, all the wirings 22 extending from the power supply unit 10 to each of the power transmission units 21 are formed by the wiring module 29. However, only a part of each of the wiring 22 may be formed by the wiring module 29. For example, in the second embodiment and the third embodiment described above, only the second wiring portions 22b or 22c may be formed by connecting the wiring modules 29 in series, and the first wiring portions 22a may be formed without using the wiring module 29. When only the second wiring portions 22b or 22c are configured by the wiring module 29 as described above, the length of the cables 35 of all the wiring modules 29 is an integral multiple of twice or more the interval (in particular, the interval between the power transmission-side coils 23 arranged adjacent to each other) of the power transmission units 21 arranged adjacent to each other. In particular, in the example illustrated in Figs. 5 and 6, since the four power transmission units 21 are integrated, the length of the cables 35 of all the wiring modules 29 is four times the interval between the power transmission units 21 arranged adjacent to each other.

In all the above embodiments, the ground power supply device 1 supplies the power to the traveling vehicle 5 in a wireless manner. However, the ground power supply device 1 may supply the power to the vehicle 5 which is not traveling, such as the parked vehicle 5, in a wireless manner. Specifically, the ground power supply device 1 is provided, for example, in a parking space having a plurality of parking bays, and the power transmission unit 21 is provided in each of the plurality of parking bays.

Although the preferred embodiments according to the present disclosure have been described above, the present disclosure is not limited to these embodiments, and various modifications and changes can be made within the scope of the claims.

### REFERENCE SIGHNS LIST

- 1: Ground power supply device
- 5: Vehicle
- 10: Power supply unit
- 20: Power transmission-side resonance circuit
- 21: Power transmission unit
- 22: Wiring
- 25: Resonance compensation capacitor
- 30: Controller

## Claims

1. A ground power supply device that transmits power to a vehicle in a wireless manner, the ground power supply device comprising:
a plurality of resonance circuits; and
one power supply source that supplies AC power having the same frequency to all the resonance circuits, wherein
each of the resonance circuits includes a coil embedded in a road and configured to transmit the power in a wireless manner, and a wiring connecting each of the coils and the power supply source,
the wiring of each of the resonance circuits has a length at least partially different from the wiring of another resonance circuit, and inductance parasitic on the wiring is formed to be at least partially different from the wiring of the other resonance circuit due to a difference in length, and
the resonance circuit further includes a capacitor having a different electrostatic capacitance in such a way that resonance frequencies of all the resonance circuits become equal when the inductance parasitic on the wiring is different.

2. The ground power supply device according to claim 1, wherein the capacitor has such electrostatic capacitance that the resonance frequencies of all the resonance circuits are the same as the frequency of the AC power when the inductance parasitic on the wiring is different.

3. The ground power supply device according to claim 1 or 2, wherein the wirings of the plurality of resonance circuits including a plurality of coils arranged adjacent to each other have the same length.

4. The ground power supply device according to claim 1 or 2, wherein
the wiring includes a first portion having the same length in all the resonance circuits and a second portion having a partially different length between the resonance circuits, and
the second portion includes the capacitor.

5. The ground power supply device according to claim 4, wherein the capacitors provided in a plurality of the second portions having the same length have the same electrostatic capacitance.

6. The ground power supply device according to claim 4, wherein the first portion does not include the capacitor.

7. The ground power supply device according to claim 4, wherein the first portion is connected to the coil, the second portion is connected to the power supply source, and a plurality of the second portions having the same length are connected to the first portion by the same connector.

8. The ground power supply device according to claim 1 or 2, wherein
the wiring is configured at least partially by connecting a plurality of wiring modules in series, the wiring modules each including a cable having the same length and a capacitor connected to the cable,
the capacitor of each of the wiring modules has such electrostatic capacitance that cancels an influence on a resonance frequency generated in the coil at a frequency of the AC power due to inductance parasitic on the cable of the wiring module, and
in the resonance circuit including wiring having a different length, the length of the wiring is different due to a difference in the number of the wiring modules constituting the wiring of the resonance circuit.

9. The ground power supply device according to claim 8, wherein the length of the cable of the wiring module is equal to an integral multiple of an interval between the coils adjacent to each other.

10. A wiring used for a resonance circuit of a ground power supply device that includes a plurality of resonance circuits and one power supply source that supplies AC power having the same frequency to all the resonance circuits and transmits a power to a vehicle in a wireless manner, wherein
the wiring of each of the resonance circuits connects each coil of the resonance circuit to the power supply source, the coil being embedded in a road and configured to transmit the power in a wireless manner,
the wiring of each of the resonance circuits has a length at least partially different from the wiring of another resonance circuit, and inductance parasitic on the wiring is formed to be at least partially different from the wiring of the other resonance circuit due to a difference in length, and
each of the wirings includes a capacitor having a different electrostatic capacitance in such a way that resonance frequencies of all the resonance circuits become equal when the inductance parasitic on the wiring is different.
